# EUROPÄISCHE PATENTANMELDUNG

(11) **EP 1 662 637 A2**
(43) Veröffentlichungstag der Anmeldung: **31.05.2006**
(21) Anmeldenummer: 05023158.8
(22) Anmeldetag: 24.10.2005
(51) Int. Cl.: H02K 11/00, H02K 29/06

(54) **Elektrische Maschine, insbesondere bürstenloser Gleichstrommotor, und Verfahren zum Justieren einer Sensoreinheit in einer elektrischen Maschine**

(30) Priorität: 25.11.2004 DE 102004056990
(71) Anmelder: MINEBEA Co., Ltd., Kitasaku-gun, Nagano-ken 3849-2100 (JP)
(72) Erfinder: Wysk, Hans-Joachim, 78048 Villingen-Schwenningen (DE)
(74) Vertreter: Liesegang, Eva

(57) **Zusammenfassung**

Elektrische Maschine, insbesondere bürstenloser Gleichstrommotor, mit wenigstens einem gehäusefesten Träger an einem Stimende der Maschine und einer Sensoreinheit, die an diesem Stimende in einer Radialebene der Maschine angeordnet und mit dem gehäusefesten Träger verbunden ist, wobei zwischen der Sensoreinheit und dem gehäusefesten Träger eine Führung in Form einer Übergangspassung gebildet ist, die zur Justierung der Sensoreinheit eine definierte Relativbewegung zwischen der Sensoreinheit und dem gehäusefesten Träger in axialer Richtung zuläßt.

## Beschreibung

Die Erfindung betrifft eine elektrische Maschine, insbesondere einen bürstenlosen Gleichstrommotor, mit einem gehäusefesten Träger an einem Stirnende der Maschine und einer Sensoreinheit, die an diesem Stirnende in einer zur Drehachse der Maschine senkrechten Radialebene der Maschine angeordnet und mit dem gehäusefesten Träger verbunden ist. Die Erfindung betrifft auch ein Verfahren zum Justieren einer Sensoreinheit in einer solchen elektrischen Maschine.

Die Erfindung wird bevorzugt auf dem Gebiet der bürstenlosen, elektronisch kommutierten Gleichstrommotoren und anderer Permanentmagnetmotoren eingesetzt. Sie ist jedoch auch auf andere Elektromotoren und Generatoren anwendbar. Mögliche Anwendungsbereiche der Erfindung liegen in der Automobiltechnik, beispielsweise für Antriebe zur Unterstützung der Lenkung, des Bremssystems, für Pumpen und Gebläse. Andere Bereiche sind Lüftergebläse in Netzteilen, motorgetriebene Werkzeuge, Spindelmotoren in Plattenlaufwerken, um nur einige wenige Beispiele zu nennen.

Die Erfindung ist anwendbar auf Elektromotoren oder Generatoren, welche als Innenläufermotor oder als Außenläufermotor konfiguriert sein können. Elektromotoren mit einer Innenläuferkonfiguration weisen einen Rotorrückschluß auf, der auf eine Welle aufgebracht ist, sowie einen oder mehrere Permanentmagnete, die auf den Rotorrückschluß aufgebracht oder in diesen eingebettet sind. Ferner umfassen die Motoren eine Statoranordnung aus z.B. einer Anzahl paketierter Metallbleche, die einen ringförmigen Statorrückschluß bilden, von dem Polschuhe nach innen abstehen. Auf die Polschuhe sind Phasenwicklungen aufgebracht. Die Rotoranordnung ist koaxial in die Statoranordnung eingefügt. Bei einer Außenläuferkonfiguration umgibt die Rotoranordnung den Stator koaxial.

Die Phasenwicklungen des Stators eines bürstenlosen Gleichstrommotors werden abhängig von der Drehlage des Rotors relativ zu dem Stator angesteuert. Verfahren und Vorrichtungen zum Steuern eines bürstenlosen elektronisch kommutierten Gleichstrommotor sind beispielsweise beschrieben in DE 100 33 561 Al, U.S. 6,400,109 B1 und DE 102 53 388 Al, auf die Bezug genommen wird.

Um die Phasenströme durch die Phasenwicklungen des Stators zu den richtigen Kommutierungszeitpunkten zu schalten, muß die jeweilige Rotorlage bekannt sein. Im Stand der Technik werden zur Erfassung der Rotorlage z.B. Encoder oder Resolver eingesetzt. Diese sind Rotorlagegeber, welche mit einer bestimmten Auflösung arbeiten und die Winkellage des Rotors abhängig von ihrer Auflösung angeben können. Ferner ist es bekannt, Hallsensoren oder andere Magnetsensoren zu verwenden, welche mit den Rotormagneten oder einem gesonderten magnetischen Signalgeber, der mit dem Rotor umläuft, zusammenwirken, um die Rotorlage und/oder die Drehzahl des Motors zu bestimmen.

Beispielsweise in der DE 101 62 208 ist ein Motor zur Verwendung in einer Servolenkung beschrieben, bei dem ein Drehsensor verwendet ist, der einen Rotor (Signalgeber) aufweist, der mit der Welle verbunden ist, sowie ein Stator (Signalaufnehmer), der an dem äußeren Umfang des Rotors vorgesehen ist. Der Stator ist mit einem Gehäuseflansch drehfest verbunden und nimmt das von dem mit der Welle umlaufenden Rotor abgegebene Signal auf.

Im Stand der Technik ist es ferner bekannt, einen Drehlagesensor für einen Gleichstrommotor mit Hallsensoren aufzubauen, die auf einer Leiterplatte angeordnet sind. Die Hallsensoren nehmen Signale auf, welche von rotorseitigen Sensormagneten abgegeben werden. Um eine zuverlässige Aussage über die Drehlage des Motors treffen zu können, ist es notwendig, die Lage der Hallsensoren in dem Motorgehäuse präzise zu justieren. Zur Erfassung der Drehlage des Rotors können für einen dreiphasigen Gleichstrommotor beispielsweise drei Hall-Sensoren um 120° (elektrisch) phasenversetzt um den Umfang der Motorwelle angeordnet werden. Es ist beispielsweise bekannt, die Hallsensoren mit einem Motorflansch oder einem Gehäusedeckel drehfest zu verbinden und diesen relativ zu dem Hauptkörper des Motorgehäuses zu verdrehen, um die Lage der Sensoren und somit die Kommutierungszeitpunkte einzustellen. Die Einstellung und Justierung der relativen Lage kann wie folgt durchgeführt werden:

Während des Betriebs des Gleichstrommotors wird die mittlere Stromaufnahme des Motors in Abhängigkeit von der relativen Lage zwischen der Leiterplatte, welche die Hall-Sensoren trägt, und dem Stator ermittelt. Die relative Lage der Leiterplatte und somit der Hall-Sensoren zu dem Stator wird so eingestellt, daß die Stromaufnahme des Motors minimal ist.

Dabei muß beachtet werden, daß die aktiven Flächen der Sensorelemente genau in einer Radialebene des Motors zu liegen kommen und einen definierten Abstand zu den Sensormagneten oder anderen Signalgebern einhalten, um eine für die Auswertung und Weiterverarbeitung der Sensorsignale optimale Signalgüte zu gewährleisten. Die Justierung der Hallsensoren in einer präzisen Radialebene mit einem definierten Abstand zwischen Hallsensoren und Sensormagneten erfordert die präzise Einhaltung enger Toleranzen und zusätzliche Prüfschritte während der Herstellung des Motors. Dadurch erhöhen sich Kosten sowie Fehlerquellen bei der Motorherstellung.

Ein weiterer Nachteil der bekannten Anordnung ist, daß das Justieren des Sensors erfordert, den Gehäusedeckel oder Gehäuseflansch zu verdrehen, so daß sich die Position, bei der Stekker oder andere Kabelausgänge aus dem Motor herausgeführt werden, relativ zum Gesamtaufbau des Motors verändern kann, was für die weitere Montage und den Einbau des Motors nachteilig sein kann.

Es ist daher die Aufgabe der Erfindung, eine elektrische Maschine, insbesondere einen bürstenlosten Gleichstrommotor, anzugeben, in der eine Sensoreinheit auf einfache Weise justiert werden kann, ohne die oben erörterten Probleme zu erzeugen.

Diese Aufgabe wird durch eine elektrische Maschine gemäß Anspruch 1 sowie durch ein Verfahren zum Justieren einer Sensoreinheit gemäß Anspruch 10 gelöst.

Die Erfindung schlägt eine elektrische Maschine, insbesondere einen bürstenlosten Gleichstrommotor vor, die einen gehäusefesten Träger an einem Stirnende der Maschine und eine Sensoreinheit, die an diesem Stirnende in einer Radialebene in der Maschine angeordnet und mit dem gehäusefesten Träger verbunden ist, aufweist. Der gehäusefeste Träger kann beispielsweise ein Flansch oder ein Gehäusedeckel der Maschine sein, wobei die Sensoreinheit an dem Stirnende der Maschine innerhalb des Flansches oder Gehäusedeckels angeordnet ist. Die Sensoreinheit kann einen Sensorhalter umfassen, auf dem Sensoren zur Erfassung der Drehlage und/oder der Drehzahl der Maschine angeordnet sind. Den Sensorhalter kann ferner eine Leiterplatte umfassen, und die Sensoren sind vorzugsweise Hallsensoren oder andere Magnetsensoren. Die Sensoreinheit arbeitet in der Praxis mit einem Signalgeber zusammen, beispielsweise einem mit der Motorwelle umlaufenden Magnetring oder unmittelbar mit den Permanentmagneten des Rotors, wobei die genaue Ausgestaltung des Signalgebers nicht Gegenstand der Erfindung ist.

Um die Sensoreinheit innerhalb des Motors präzise zu positionieren sieht die Erfindung vor, zwischen der Sensoreinheit und dem gehäusefesten Träger eine Führung in Form einer Übergangspassung zu bilden, die zur Justierung der Sensoreinheit eine definierte Relativbewegung zwischen der Sensoreinheit und dem gehäusefesten Träger in axialer Richtung zuläßt. Dadurch ist es möglich, die Sensoreinheit in einer definierten Radialebene in dem Motorgehäuse, mit vorgegebenem Abstand zu einem zugehörigen Signalgeber anzuordnen. Durch die axiale Positionierbarkeit der Sensoreinheit ist es ferner möglich, die Sensoreinheit bei Bedarf axial zu verschieben und dadurch relativ zu einer Referenzfläche an dem gehäusefesten Träger und somit relativ zu dem Gehäuse des Motors präzise auszurichten. Idealer Weise ist eine Dreipunkt-Anlage an den Sensorflächen senkrecht zur Drehsachse vorgesehen, durch die die größten Bauelemente-/ und Montagetoleranzen ausgeglichen werden.

Durch die Übergangspassung wird eine einfache Möglichkeit der axialen Ausrichtung der Sensoreinheit in dem Motorgehäuse geschaffen, so daß der gehäusefeste Träger mit weniger engen Toleranzen gefertigt werden kann.

In einer bevorzugten Ausführung umfaßt die Führung wenigstens eine Führungsnut und eine korrespondierende Führungszunge, welche an der Sensoreinheit und dem gehäusefesten Träger ausgebildet sind. Die Führungszunge greift in die Führungsnut ein und ist in dieser in axialer Richtung verschiebbar, wobei zwischen Führungsnut und Führungszunge eine spielfreie Verbindung besteht und für das Verschieben der Sensoreinheit relativ zu dem gehäusefesten Träger eine gewisse Gleitreibung überwunden werden muß. Dies hat den Vorteil, daß dann, wenn keine Kraft auf die Sensoreinheit ausgeübt wird, diese ihre eingestellte Position beibehält. Gleichwohl ist es zweckmäßig, die Sensoreinheit nach dem Justieren an dem gehäusefesten Träger zu fixieren.

In einer besonders bevorzugten Ausführung wird die Führungsnut durch eine an dem gehäusefesten Träger ausgebildete Ringnut oder mehrere Ringnutabschnitte gebildet, wobei an der Sensoreinheit mehrere Führungszungen ausgebildet sind, welche in die Ringnut oder die Ringnutabschnitte eingreifen.

In einer weiteren, besonders bevorzugten Ausführung der Erfindung läßt die zwischen der Sensoreinheit und dem gehäusefesten Träger gebildete Führung auch eine Drehbewegung zwischen der Sensoreinheit und dem gehäusefesten Träger zu. Dies ermöglicht eine Justierung der Sensoreinheit nicht nur in axialer Richtung, sondern auch in tangentialer oder Umfangsrichtung, ohne daß der gehäusefeste Träger relativ zu dem Gehäusekörper der Maschine verdreht werden müßte. Vorzugsweise weist der gehäusefeste Träger, wenn er die Sensoreinheit in dem Motorgehäuse einschließt, wenigstens eine Durchbrechung auf, durch welche die Sensoreinheit von außen zugänglich ist, um die Sensoreinheit relativ zu dem gehäusefesten Träger um die Drehachse der Maschine zu drehen. Dies hat den Vorteil, daß zunächst der gehäusefeste Träger mit der daran in axialer Richtung vorjustierten Sensoreinheit an dem Motor befestigt werden kann und anschließend die exakte Drehlage der Sensoreinrichtung eingestellt wird. Zur Einstellung der Sensoreinrichtung wird der Elektromotor vorzugsweise angetrieben. Ein Beispiel für ein Verfahren zur Einstellung der Sensoreinrichtung ist in der deutschen Patentanmeldung 10 2004 019 636.2 beschrieben, auf die Bezug genommen wird. Dies erfolgt beispielsweise unter Verwendung eines Werkzeuges, wie eines Schraubendrehers, der durch die Durchbrechung hindurchgeführt wird, um die Sensoreinheit in der Regel um nur einige wenige Grad mit oder gegen den Uhrzeigersinn zu verdrehen. Vorzugsweise weist die Sensoreinheit wenigstens eine Vertiefung auf, welche durch die Durchbrechung zugänglich ist und in die das Werkzeug eingreift.

Die Erfindung sieht auch ein Verfahren zum Justieren einer Sensoreinheit in einer elektrischen Maschine der oben beschriebenen Art vor. Zunächst wird die Sensoreinheit mit dem gehäusefesten Träger verbunden, und anschließend wird mit Hilfe der Führung ein definierter axialer Abstand zwischen der Sensoreinheit und dem gehäusefesten Träger eingestellt. Der gehäusefeste Träger wird mit der Maschine verbunden, so daß die vorjustierte Sensoreinheit an dem Stirnende der Maschine in einer vorgegebenen Radialebene zu liegen kommt.

Der axiale Abstand zwischen der Sensoreinheit und dem gehäusefesten Träger kann auf einfache Weise mit Hilfe einer Einstellehre eingestellt werden, wobei der definierte axiale Abstand spezieller zwischen einer Referenzfläche der Sensoreinheit und einer Referenzfläche des gehäusefesten Trägers eingestellt wird.

Es ist möglich, die Sensoreinheit relativ zu dem gehäusefesten Träger zu verdrehen, nachdem dieser mit der Maschine verbunden wurde, selbst wenn die Sensoreinheit innerhalb des Trägers liegt. Hierzu sind in dem gehäusefesten Träger Durchbrechungen vorgesehen, durch welche die Sensoreinheit von außen zugänglich ist. Durch diese Durchbrechungen kann ein Werkzeug, wie ein Schraubendreher eingeführt werden, der mit der Sensoreinheit in Eingriff gebracht wird, um diese in der Regel um nur einige wenige Grad zu verdrehen.

Schließlich kann noch vorgesehen werden, die Sensoreinheit an dem gehäusefesten Träger zu fixieren, nachdem sie justiert und der gehäusefeste Träger mit der Maschine verbunden wurde. Zu diesem Zweck kann beispielsweise durch die genannten Durchbrechungen ein Kleber eingebracht werden, der die Sensoreinheit und den gehäusefesten Träger verbindet und z.B. gegen eindringendes Getriebeöl vollständig abdichtet.

Die Erfindung ist im folgenden anhand bevorzugter Ausführungen mit Bezug auf die Zeichnungen näher erläutert. In den Figuren zeigen:
- Fig. 1a, 1b und 1c: eine geschnittene perspektivische Darstellung, eine geschnittene Seitenansicht sowie eine geschnittene Draufsicht auf einen Teil eines bürstenlosen Gleichstrommotors gemäß der Erfindung, der einen gehäusefesten Träger und eine Sensoreinheit umfaßt;
- Fig. 2: eine geschnittene Seitenansicht des gehäusefesten Trägers aus Fig. 1;
- Fig. 3a und 3b: eine Seitenansicht sowie eine Draufsicht auf die Sensoreinheit aus Fig. 1;
- Fig. 4a: eine Längsschnittdarstellung durch einen bürstenlosen Gleichstrommotor gemäß der Erfindung; und
- Fig. 4b: eine Draufsicht auf einen Ausschnitt des Gleichstrommotors der Fig. 4a.

Die Erfindung ist im folgenden in Kontext eines bürstenlosen Gleichstrommotors beschrieben, wobei ein Fachmann verstehen wird, daß der Grundsatz der Erfindung auch auf andere elektrische Maschinen anwendbar ist. Gleiche Komponenten sind in den Figuren mit denselben Bezugszeichen gekennzeichnet.

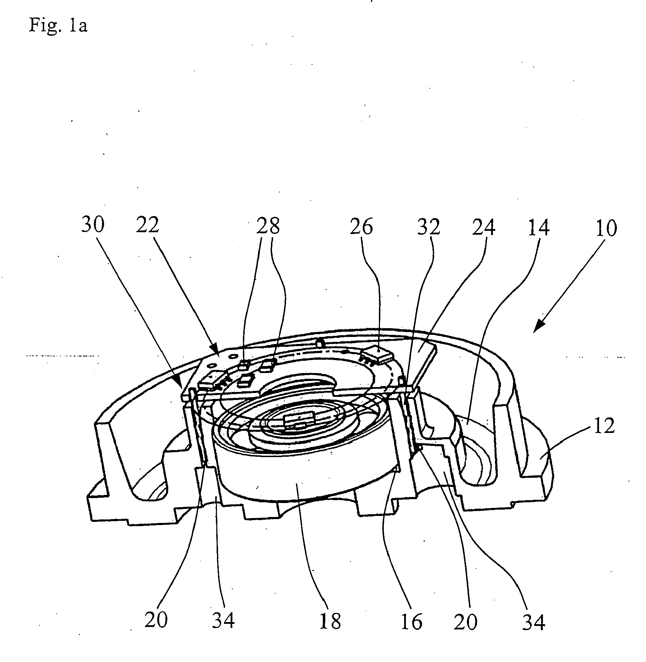

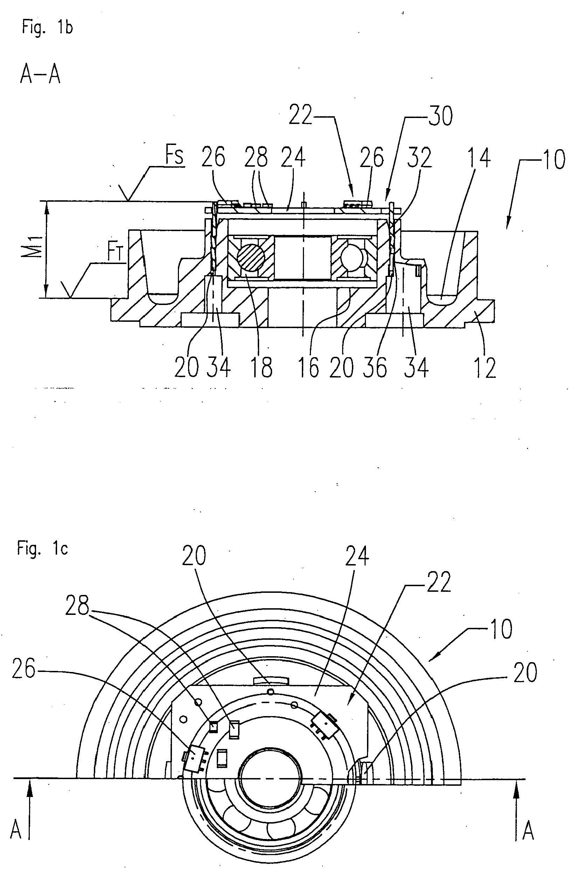

In den Fig. 1 a bis 1 c und 2 ist ein gehäusefester Träger 10 dargestellt, der in der gezeigten Ausführung die Funktion eines Flansches oder Gehäusedeckels haben kann und im folgenden als Flansch 10 bezeichnet ist. Der Flansch 10 umfaßt einen Flanschabschnitt 12 zur Verbindung mit einem Motorgehäuse, eine ringförmige Vertiefung 14, in der Wickelköpfe von Statorwicklungen des Motors aufgenommen werden können, sowie einen Lagersitz 16, in dem ein Kugellager 18 zur Lagerung einer Motorwelle aufgenommen ist.

In dem Flansch 10 sind in Umfangsrichtung verteilt mehrere Führungsnuten 20 zur Aufnahme einer Sensoreinheit 22 ausgebildet. In der gezeigten Ausführung sind um den Umfang des Flansches verteilt vier Führungsnuten 20 zur Lagerung der Sensoreinheit 22 ausgebildet. Alternativ kann auch eine einzige umlaufende Nut vorgesehen sein.

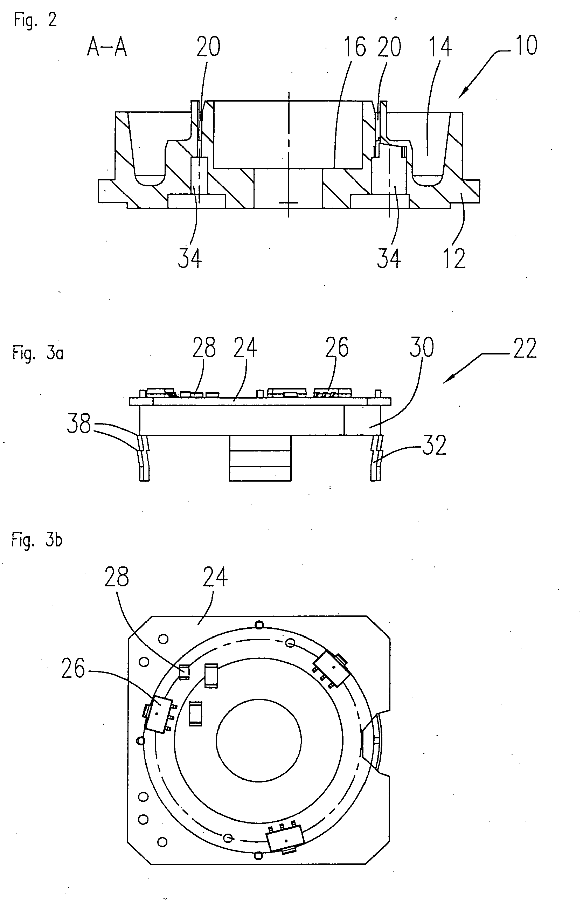

Die Sensoreinheit 22, die in den Fig. 1a bis 1c, 3a und 3b gezeigt ist, umfaßt in der gezeigten Ausführung eine Leiterplatte 24, auf die Sensorelemente 26, z.B. Hall-ICs, sowie weitere elektronische Bauteile 28 aufgebracht sind. Die Sensoreinheit 22 umfaßt ferner einen Leiterplattenhalter 30, der in der gezeigten Ausführung Führungszungen 32 umfaßt, welche mit den Führungsnuten 20 in Eingriff kommen. Zwischen den Führungsnuten 20 und den Führungszungen 32 ist eine Übergangspassung gebildet, so daß die Sensoreinheit 22 in den Führungsnuten 20 des Flansches durch Reibkraft gehalten ist, diese Reibkraft jedoch überwunden werden kann, um die Sensoreinheit 22 relativ zu dem Flansch 10 in axialer sowie in tangentialer Richtung um die Drehachse zu bewegen.

Ein Fachmann wird verstehen, daß sowohl der gehäusefeste Träger 10, in der gezeigten Ausführung der Flansch, als auch die Sensoreinheit 22 anders als dargestellt aufgebaut sein können. Entscheidend ist, daß zwischen dem gehäusefesten Träger 10 und der Sensoreinheit 22 eine Übergangspassung gebildet wird, die eine Justierung der Sensoreinheit in axialer Richtung zur Einstellung eines definierten Abstandes zwischen der Sensoreinheit und dem gehäusefesten Träger sowie optional eine Drehbewegung der Sensoreinheit 22 relativ zu dem gehäusefesten Träger erlaubt.

Der definierte Abstand zwischen der Sensoreinheit 22 und dem gehäusefesten Träger 10 wird dadurch bestimmt, daß sowohl an der Sensoreinheit 22 als auch an dem gehäusefesten Träger 10 Referenzflächen Fₛ bzw. F_{T} sowie ein Setzmaß M₁ zwischen diesen definiert werden, wie in Fig. 1b gezeigt. Als Referenzfläche Fₛ der Sensoreinheit wird vorzugsweise die Oberfläche der Sensorelemente 26 gewählt, weil es bei der Justierung der Sensoreinheit 22 maßgeblich auf den axialen Abstand zwischen den Sensorelementen 26 und einem zugeordneten Signalgeber ankommt, der den Sensorelementen gegenüberliegt. Als Referenzfläche an dem Flansch 10 wird vorzugsweise eine Radialfläche gewählt, die mit dem Motorgehäuse verbunden wird und sich zum Ansetzen einer Einstellehre eignet. Durch Krafteinleitung auf die Sensoreinheit 22 in axialer Richtung wird die Sensoreinheit 22 in axialer Richtung auf das vorbestimmte Setzmaß M eingestellt. Dabei ist es erforderlich, die Reibkraft zwischen den Führungsnuten 20 des Flansches und den Führungszungen 32 des Leiterplattenhalters zu überwinden. Die Krafteinleitung erfolgt vorzugsweise an mehreren Stellen, parallel zur Referenzfläche F_{T} gleichmäßig über die Oberfläche der Sensoreinheit 22 verteilt, um eine präzise Ausrichtung der Sensorelemente 26 in einer gewünschten Radialebene ohne ein Verkippen der Sensoreinheit 22 sicherzustellen.

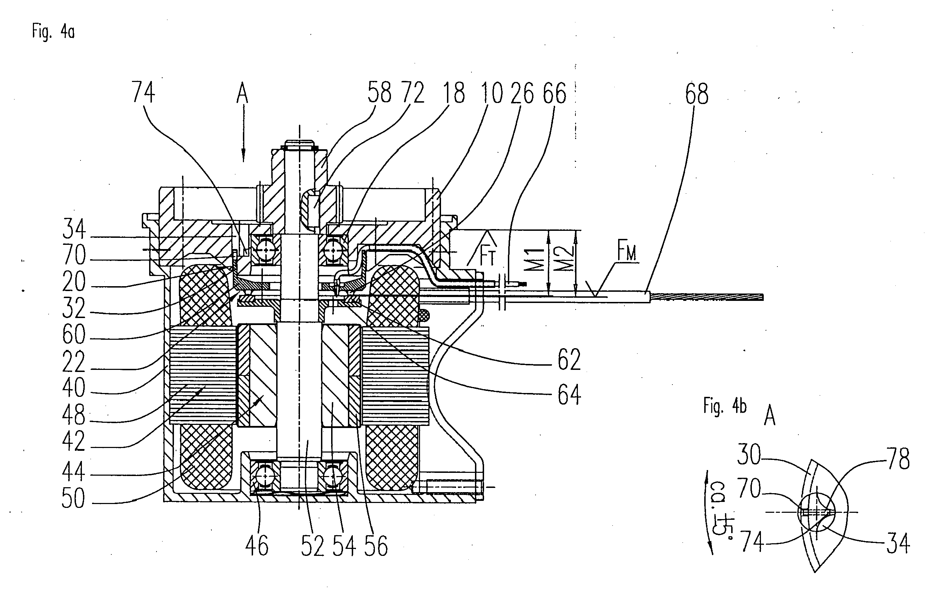

Die so vormontierte Einheit aus Flansch 10 und Sensoreinheit 22 kann dann mit dem Gehäuse eines Elektromotors verbunden werden, wie mit Bezug auf Fig. 4a deutlicher gezeigt ist. Nach dem Anbringen des Flansches, Gehäusedeckels oder allgemeiner des gehäusefesten Trägers an das Motorgehäuse liegt die Sensoreinheit innerhalb des Gehäuses und ist von außen über Bohrungen 34 zugänglich. In der gezeigten Ausführung sind die Bohrungen 34 nach Art von Blindbohrungen ausgebildet, die jeweils den Führungsnuten 20 gegenüberliegen, wobei die Führungsnuten 20 in den Blindbohrungen 34 münden. Dadurch ist es möglich, ein Werkzeug, wie einen Schraubendreher, in eine durchbrochene Blindbohrung 34 einzuführen und mit den Führungszungen in Eingriff zu bringen, um die Sensoreinheit 22 um einen begrenzten Winkel zu verdrehen. Mit der erfindungsgemäßen Anordnung ist es somit möglich, nach dem Schließen des Motorgehäuses und der Positionierung des gehäusefesten Trägers relativ zu dem Motorgehäuse von außen auf die Sensoreinheit 22 zuzugreifen, um nach Inbetriebnahme des Motors die optimale Winkellage der Sensorelemente durch Verdrehen der Sensoreinheit 22 zu justieren. Da zwischen den Führungsnuten 20 und den Führungszungen 32 eine Übergangspassung gebildet ist, bleibt die Sensoreinheit 22 zunächst in ihrer eingestellten Lage, wobei es zweckmäßig ist, die von außen zugänglichen Führungszungen 32 nach dem Justieren mit einem Klebstoff 36 in den Führungsnuten zu sichern. Dieser Klebstoff kann zusätzlich die Führungsnuten nach außen abdichten. Zum Fixieren der Führungszungen in den Führungsnuten kann anstelle von Kleber auch Sicherungslack, eine Dichtmasse oder ähnliches verwendet werden. Auch die Verwendung von Verschlußkappen ist möglich.

Wie in den Fig. 2 und 3a gezeigt, können die Führungsnuten 20 sowie die Führungszungen 32 mit einer gestuften Konfiguration ausgebildet sein, um einen festen Halt zwischen Führungsnuten und Führungszungen zu gewährleisten, der nur gegen den Widerstand einer relativ hohen Reibkraft überwunden werden kann. Ferner ist es möglich, an den freien Enden der Führungszungen 32 Schlitze vorzusehen, in welche das Werkzeug eingreift, um die Sensoreinheit zu verdrehen. Fixiernasen 38 an den Führungszungen 32 dienen dazu, ein Herausrutschen der Sensoreinheit 22 aus dem Flansch 10 zu verhindern, sowie zur Erhöhung der Reibkraft.

Die Führungsnuten 20 sind vorzugsweise so bemessen, daß sie nur eine begrenzte Drehung der Sensoreinheit 22, beispielsweise in einem Winkelbereich von +/- 5 Grad zu lassen. Eine weitergehende Verdrehung ist in der Regel nicht notwendig, weil die Sensoreinheit über den Leiterplattenhalter 30 bereits vorpositioniert wird.

Fig. 4a zeigt einen Längsschnitt durch einen bürstenlosen Gleichstrommotor gemäß der Erfindung. Der Motor umfaßt ein Gehäuse 40, in dem eine Statoranordnung 42, eine Rotoranordnung 44 sowie Lager 18, 46 zum drehbaren Lagern der Rotoranordnung aufgenommen sind. Die Statoranordnung 42 umfaßt paketierte Metallbleche 48 und Wicklungen 50 und grenzt einen Innenraum ein, in den die Rotoranordnung eingefügt ist. Die Rotoranordnung 44 umfaßt die Motorwelle 52, einen Eisenrückschluß 54 und Permanentmagnete 56. An seinem Abtriebsende ist der Elektromotor durch den Flansch 10 verschlossen. Die Lager 18, 46 für die Lagerung der Rotoranordnung sind in dem Flansch 10 bzw. das Gehäuse 40 integriert.

Der Flanschaufbau ist im wesentlichen wie mit Bezug auf die vorhergehenden Figuren beschrieben, wobei in der gezeigten Ausführung der Flansch ein Antriebsritzel (kleines Zahnrad) 58 umschließt, das durch eine Paßfeder 72 mit der Motorwelle 52 verbunden ist. Der Flansch 10 weist wie in der vorhergehenden Ausführung Führungsnuten 20 auf, in welche Führungszungen 32 der Sensoreinheit 22 eingeführt sind. Abweichend von der zuvor beschriebenen Ausführung sind in Fig. 4a die Leiterplatte und der Leiterplattenhalter der Sensoreinheit als ein integriertes Bauteil 60, z.B. als MID-Bauteil (MID = molded interconnected device), ausgeführt. Dies trägt die Sensorelemente 26. Den Sensorelementen 26 gegenüberliegend ist ein Drehsignalgeber 62 in Form einer ringförmigen Magnetbahn auf einem Trägerring 64 angeordnet, der ebenfalls zur Referenzfläche F_{T} genau ausgerichtet ist, wodurch sich die Gesamttoleranz vermindert.

In Fig. 4a sind ferner eine Signalleitung 66, die mit der Sensoreinheit 22 verbunden ist, sowie eine Versorgungsleitung 68, die mit den Wicklungen 50 verbunden ist, dargestellt.

Aus Fig. 4a ist deutlich zu erkennen, wie wichtig die präzise Justierung der Sensoreinheit 22 relativ zu dem Signalgeber 62 sowohl in axialer als auch in tangentialer Richtung ist. Ferner ist erkennbar, daß die Drehlage der Sensoreinheit 22 relativ zu dem Drehsignalgeber 62 auch noch nach der Montage und Fixierung des Flansches 10 an dem Motorgehäuse 40 erfolgen kann. Zu diesem Zweck kann ein Werkzeug, wie ein Schraubendreher, durch die Bohrung 34 geführt werden. Die Klinge des Schraubendrehers kann mit einer Seitenkante mit den Führungszungen 32, insbesondere mit dem darin ausgebildeten Schlitz 70, und mit der anderen Seitenkante, mit einer V-förmigen Kerbe 74 im Grund der Bohrung 34 in Eingriff gebracht werden. Dabei dient die V-förmige Kerbe 74 als relativer Drehpunkt, um die Sensoreinheit 22 durch Drehen der Schraubendreherklinge um einen begrenzten Winkel zu verschwenken. Dies ist in Figur 4b veranschaulicht, die einen Ausschnitt der Figur 4a in Draufsicht zeigt. Wie darin dargestellt, wird Klinge 78 eines Schraubendrehers in die Bohrung 34 eingeführt und kommt mit ihren beiden Seitenkanten in dem Schlitz 70 der Führungszunge 32 bzw. in der V-förmigen Kerbe 74 zu liegen. Innerhalb der Kerbe kann der Schraubendreher geschwenkt werden, um den Leiterplattenhalter 30 um einen begrenzten Winkel, bspw. +/- 5° zu verdrehen. Der Boden der V-förmigen Kerbe 74 dient dabei als Drehpunkt für die Klinge 78 des Schraubendrehers.
Nach dem Justieren der Sensoreinheit 22 kann diese am Flansch 10 fixiert werden, indem durch die Bohrungen 34 ein Kleber oder ein anderes Fixiermittel aufgebracht wird. Dies hat den zusätzlichen Vorteil, daß der Flansch 10 im Bereich der Führungsnuten 20 nach außen möglichst vollständig abgedichtet wird.

Die Erfindung wurde vorstehend am Beispiel eines bürstenlosen Gleichstrommotors beschrieben, bei dem die Sensoreinheit mit einem Flansch verbunden ist. Ein Fachmann wird verstehen, daß die Erfindung auch auf andere elektrische Maschinen anwendbar ist. Ferner kann die Sensoreinheit anstelle mit einem Flansch auch mit einem Gehäusedeckel oder einem anderen gehäusefesten Träger verbunden werden. Die Erfindung ist nicht auf die beschriebenen Einzelheiten beschränkt.

Die Erfindung gibt eine elektrische Maschine sowie ein Verfahren zum Justieren einer Sensoreinheit in einer elektrischen Maschine an, mit denen die Justierung der Sensoreinheit in axialer sowie in tangentialer Richtung problemlos durchgeführt werden kann, ohne daß die Lage eines Flansches, Gehäusedeckels oder anderen gehäusefesten Bauteils relativ zu der elektrischen Maschine verändert werden müßte. Dadurch ist es möglich, das gehäusefeste Bauteil und Sensoreinheit mit geringen Anforderungen an Einzeltoleranzen zu fertigen und gleichwohl eine präzise Positionierung der Sensoreinheit zu erreichen. Probleme mit einer Verschiebung der Lage von Steckern oder Kabelausgängen an dem gehäusefesten Bauteil relativ zu dem Gehäusekörper der elektrischen Maschine entstehen nicht.

Auf dieselbe Weise wie oben mit bezug auf die Sensoreinheit beschrieben, kann erfindungsgemäß auch ein Drehsignalgeber, z.B. der Signalgeber 62 mit dem Trägerring 64 justiert werden, indem er durch Definition eines Setzmaßes auf einen vorgegebenen Abstand zu der Referenzfläche F_{T} in axialer Richtung eingestellt wird. Hierzu kann beispielsweise eine Übergangspassung zwischen dem Träger 64 und der Welle 52 ausgenutzt werden. In Figur 4 ist ein erstes Setzmaß M1 eingezeichnet, daß den Abstand zwischen der Oberfläche der Sensoreinheit 22, insbesondere der Sensorelemente 26, und der Referenzfläche F_{T} definiert, sowie ein zweites Setzmaß M2, daß den Abstand zwischen der Oberfläche des Drehsignalgebers 62 und derselben Referenzfläche F_{T} definiert. Die Summentoleranz zwischen dem Setzmaß M₁ für die Sensoreinheit 22 und dem Setzmaß M₂ für den Drehsignalgeber 62 ist vergleichsweise gering.

Ferner kann die Erfindung auch an dem gegenüberliegenden Lager 46, innen- oder außenliegend, realisiert werden, indem ein Sensorikdeckel mit entsprechenden Merkmalen wie oben beschrieben an diesem Stirnende des Motors angeordnet wird.

Die in der vorstehenden Beschreibung, den Ansprüchen und den Zeichnungen offenbarten Merkmale können sowohl einzeln als auch in beliebiger Kombination für die Verwirklichung der Erfindung in den verschiedenen Ausführungen von Bedeutung sein.

### Bezugszeichenliste

- 10: gehäusefester Träger, Flansch oder Gehäusedeckel
- 12: Flanschabschnitt
- 14: Ringförmige Vertiefung
- 16: Lagersitz
- 18: Kugellager
- 20: Führungsnuten
- 22: Sensoreinheit
- 24: Leiterplatte
- 26: Sensorelemente
- 28: elektronische Bauteile
- 30: Leiterplattenhalter
- 32: Führungszungen
- 34: Bohrungen
- 36: Klebstoff
- 38: Fixiernasen
- 40: Gehäuse
- 42: Statoranordnung
- 44: Rotoranordnung
- 46: Lager
- 48: Metallbleche
- 50: Wicklungen
- 52: Motorwelle
- 54: Eisenrückschluß
- 56: Permanentmagnete
- 58: Rotornabe
- 60: Leiterplatte und Leiterplattenhalter (integriert)
- 62: Drehsignalgeber
- 64: Trägerring
- 66: Signalleitung
- 68: Versorgungsleitung
- 70: Schlitz
- 72: Paßfeder
- 74: V-förmige Kerbe
- 78: Schraubendreherklinge
- F_{S}: Sensorreferenzfläche
- F_{T}: Trägerreferenzfläche
- M₁, M₂: Setzmaß

## Patentansprüche

1. Elektrische Maschine, insbesondere bürstenloser Gleichstrommotor, mit einem gehäusefesten Träger (10) an einem Stirnende der Maschine und einer Sensoreinheit (22), die an diesem Stirnende in einer Radialebene der Maschine angeordnet und mit dem gehäusefesten Träger (10) verbunden ist, wobei
zwischen der Sensoreinheit (22) und dem gehäusefesten Träger (10) eine Führung in Form einer Übergangspassung gebildet ist, die zur Justierung der Sensoreinheit (22) eine definierte Relativbewegung zwischen der Sensoreinheit (22) und dem gehäusefesten Träger (10) in axialer Richtung zuläßt.

2. Maschine nach Anspruch 1, **dadurch gekennzeichnet, daß** der gehäusefeste Träger (10) Teil eines Flansches oder eines Gehäusedeckels der Maschine ist und die Sensoreinheit (22) an dem Stirnende der Maschine innerhalb des Flansches oder Gehäusedeckels angeordnet ist.

3. Maschine nach Anspruch 1 oder 2, **dadurch gekennzeichnet, daß** die Sensoreinheit (22) einen Sensorhalter (24, 30, 60) aufweist, auf dem Sensoren (26) zur Erfassung der Drehlage und/oder Drehzahl der Maschine angeordnet sind.

4. Maschine nach einem der vorangehenden Ansprüche, **dadurch gekennzeichnet, daß** die Führung wenigstens eine Führungsnut (20) und eine korrespondierende Führungszunge (32) umfaßt, die an der Sensoreinheit (22) und dem gehäusefesten Träger (10) ausgebildet sind, wobei die Führungszunge (32) in die Führungsnut (20) eingreift und in dieser in axialer Richtung verschiebbar ist, so daß zur Justierung der Sensoreinheit (22) ein definierter Abstand zwischen der Sensoreinheit (22) und dem gehäusefesten Träger (10) einstellbar ist.

5. Maschine nach einem der vorangehenden Ansprüche, **dadurch gekennzeichnet, daß** die Führungsnut (20) durch eine an dem gehäusefesten Träger (10) ausgebildete Ringnut oder mehrere Ringnutabschnitte gebildet ist und an der Sensoreinheit (22) mehrere Führungszungen (32) ausgebildet sind, die in die Ringnut oder Ringnutabschnitte eingreifen.

6. Maschine nach einem der vorangehenden Ansprüche, **dadurch gekennzeichnet, daß** die zwischen der Sensoreinheit (22) und dem gehäusefesten Träger (10) gebildete Führung auch eine Drehbewegung zwischen der Sensoreinheit (22) und dem gehäusefesten Träger (10) zuläßt und von außen fixierbar ist.

7. Maschine nach den Ansprüchen 2 und 6, **dadurch gekennzeichnet, daß** der gehäusefeste Träger (10) wenigstens eine Bohrung (34) aufweist, durch welche die Sensoreinheit (22) von außen zugänglich ist, um die Sensoreinheit (22) relativ zu dem gehäusefesten Träger (10) um die Drehachse der Maschine zu drehen.

8. Maschine nach Anspruch 7, **dadurch gekennzeichnet, daß** die Bohrung (34) so dimensioniert ist, daß sie das Hindurchführen eines Werkzeuges, wie eines Schraubendrehers, erlaubt, dessen Klinge in eine V-förmige Kerbe (74) in dem Träger (10) und in einen Schlitz (70) in der Sensoreinheit (22) eingreift, wobei die V-förmige Kerbe (74) als Drehpunkt für die Sensoreinheit (22) dient..

9. Maschine nach Anspruch 7 oder 8, **dadurch gekennzeichnet, daß** die Bohrung (34) abgedichtet werden kann.

10. Verfahren zum Justieren einer Sensoreinheit in einer elektrischen Maschine, insbesondere einem bürstenlosen Gleichstrommotor, mit wenigstens einem gehäusefesten Träger (10) an einem Stirnende der Maschine und der Sensoreinheit (22), mit folgenden Verfahrensschritten:
Verbinden der Sensoreinheit (22) mit dem gehäusefesten Träger (10) derart, daß zwischen der Sensoreinheit (22) und dem gehäusefesten Träger (10) eine Führung in Form einer Übergangspassung gebildet wird, die eine definierte Relativbewegung zwischen der Sensoreinheit (22) und dem gehäusefesten Träger (10) in axialer Richtung zuläßt; Einstellen eines definierten axialen Abstandes (M1) zwischen der Sensoreinheit (22) und dem gehäusefesten Träger (10); und
Verbinden des gehäusefesten Trägers mit der Maschine derart, daß die Sensoreinheit (22) an dem Stirnende der Maschine in einer vorgegebenen Radialebene zu liegen kommt.

11. Verfahren nach Anspruch 10, **dadurch gekennzeichnet, daß** der axiale Abstand zwischen der Sensoreinheit (22) und dem gehäusefesten Träger (10) mithilfe einer Einstellehre eingestellt wird.

12. Verfahren nach Anspruch 10 oder 11, **dadurch gekennzeichnet, daß** der gehäusefeste Träger (10) Teil eines Flansches oder eines Gehäusedeckels der Maschine ist und die Sensoreinheit (22) an dem Stirnende der Maschine innerhalb des Flansches oder Gehäusedeckels angeordnet wird.

13. Verfahren nach einem der Ansprüche 10 bis 12, **dadurch gekennzeichnet, daß** nach dem Verbinden des gehäusefesten Trägers (10) mit der Maschine die Sensoreinheit relativ zu dem gehäusefesten Träger (10) verdreht wird.

14. Verfahren nach Anspruch 13, **dadurch gekennzeichnet, daß** der gehäusefeste Träger (10) wenigstens eine Bohrung (34) aufweist, durch welche die Sensoreinheit (22) nach dem Verbinden des gehäusefesten Träger (10) mit der Maschine von außen zugänglich ist, und die Sensoreinheit (22) relativ zu dem gehäusefesten Träger (10) gedreht wird, indem ein Werkzeug, wie ein Schraubendreher, durch die Bohrung (34) hindurchgeführt und mit der Sensoreinheit (22) in Eingriff gebracht wird.

15. Verfahren nach einem der Ansprüche 10 bis 14, **dadurch gekennzeichnet, daß** die Sensoreinheit (22) an dem gehäusefesten Träger (10) fixiert wird, nachdem der gehäusefeste Träger (10) mit der Maschine verbunden wurde.

16. Verfahren nach einem der Ansprüche 10 bis 15, **dadurch gekennzeichnet, daß** ein Drehsignalgeber (62) auf gleiche Weise wie die Sensoreinheit (22) auf einen definierten Abstand zu einem gehäusefesten Träger gebracht wird.
